# FASCICULE DE BREVET EUROPEEN

(11) **EP 3 863 893 B1**
(45) Date de publication et mention de la délivrance du brevet: **14.12.2022**
(21) Numéro de dépôt: 19783041.7
(22) Date de dépôt: 08.10.2019
(51) Int. Cl.: B60R 13/01, B29C 44/12, B60R 5/04

(54) **PANNEAU DE GARNISSAGE INTÉRIEUR DE VÉHICULE AUTOMOBILE**
INNENVERKLEIDUNG FÜR EIN KRAFTFAHRZEUG
VEHICLE INTERIOR TRIM PANEL

(30) Priorité: 09.10.2018 FR 1859349
(43) Date de publication de la demande: 18.08.2021
(73) Titulaire: TREVES PRODUCTS, SERVICES & INNOVATION, 75008 Paris (FR)
(72) Inventeur: PHILIPPE, Benoit, 17246 SANTA CRISTINA D'ARO - GIRONA (ES); GUTIERREZ GARCIA, Jordi, 75008 Paris (FR)
(74) Mandataire: Sayettat, Julien Christian
(86) Numéro de dépôt international: PCT/EP2019/077262
(87) Numéro de publication internationale: WO 2020/074540

(56) Documents cités:
- EP-A1- 1 844 919
- US-A1- 2013 257 100

## Description

L'invention concerne un panneau de garnissage intérieur de véhicule automobile et une architecture de montage d'un tel panneau.

Il est connu, notamment du document US2013257100-A1, de réaliser un panneau de garnissage intérieur de véhicule automobile, ledit panneau comprenant :
- un corps en forme générale de plaque présentant une face d'endroit de réception d'une charge et une face d'envers,
- et au moins un profilé métallique allongé de rigidification dudit corps en flexion, ledit profilé s'étendant sensiblement d'une bordure à une autre bordure opposée dudit corps, lesdites bordures étant destinées à prendre appui sur deux bases de réception solidaires de la caisse du véhicule, ledit profilé étant formé par une bande plane de tôle en acier pliée selon sa longueur selon au moins une ligne de pliage de manière à maximiser son moment d'inertie selon sa longueur, l'acier de ladite tôle présentant une limite d'élasticité supérieure à 400 MPa.

Un tel profilé permet d'assurer une très bonne rigidification, mais au prix d'un poids important.

On connait par ailleurs, de l'état de la technique, divers types de profilés :
- en acier plié par laminage, au moyen de trains de galets ; cependant, avec un tel mode de fabrication, il est impossible d'utiliser des aciers à haute limite d'élasticité, en particulier supérieure à 250-300 MPa ; il en résulte la nécessité d'avoir un profilé de section importante, présentant donc un poids élevé, pour que ledit profilé remplisse correctement sa fonction de rigidification,
- en aluminium extrudé ; l'avantage est la légèreté d'un tel profilé ; cependant, son module de Young est faible, ce qui entraîne une forte déformation sous charge ; sa limite d'élasticité est également faible, ce qui interdit le dépôt de charges importantes sous peine de déformation permanente du profilé,
- en pultrusion ; l'avantage est là encore la légèreté du profilé ; cependant, son module de Young est faible, ce qui entraîne une forte déformation sous charge.

Face à tous ces inconvénients, l'invention a pour but de proposer un panneau pourvu d'un profilé de faible poids, non déformable de façon permanente et de grande rigidité.

A cet effet, et selon un premier aspect, l'invention propose un panneau de garnissage intérieur de véhicule automobile, ledit panneau comprenant :
- un corps en forme générale de plaque présentant une face d'endroit de réception d'une charge et une face d'envers,
- et au moins un profilé métallique allongé de rigidification dudit corps en flexion, ledit profilé s'étendant sensiblement d'une bordure à une autre bordure opposée dudit corps, ledit profilé étant formé par une bande plane de tôle en acier pliée selon sa longueur selon au moins une ligne de pliage de manière à maximiser son moment d'inertie selon sa longueur, l'acier de ladite tôle présentant une limite d'élasticité supérieure à 400 MPa,
ladite bande étant pliée dans un même sens à angle droit selon deux lignes de pliage, de sorte que ledit profilé présente:
- deux pans parallèles s'étendant en vis-à-vis l'un de l'autre respectivement selon chacune des faces du corps,
- et un pan de jonction desdits pans parallèles, ledit pan de jonction s'étendant selon l'épaisseur dudit corps.

Avec un tel agencement, on dispose d'un profilé très léger, pouvant recevoir une charge importante, et ceci sans déformation permanente.

Selon un deuxième aspect, l'invention propose une architecture de montage d'un tel panneau.

D'autres particularités et avantages de l'invention apparaîtront dans la description qui suit, faite en référence aux figures jointes dans lesquelles :
- les figures 1a et 1b sont des vues en perspective partielle d'un profilé selon une première (figure 1a) et une deuxième (figure 1b) réalisation,
- la figure 2 est une vue schématique en perspective en semi transparence d'un panneau selon une réalisation pourvu du profilé représenté en figure 1a, ledit panneau étant monté dans un véhicule.

En référence aux figures, on décrit un panneau 1 de garnissage intérieur de véhicule automobile - par exemple un faux plancher de compartiment à bagages ou d'habitacle, ou encore une tablette de recouvrement dudit compartiment - ledit panneau comprenant :
- un corps 2 en forme générale de plaque présentant une face d'endroit 3 de réception d'une charge et une face d'envers 4,
- et au moins un profilé 5 métallique allongé de rigidification dudit corps en flexion, ledit profilé s'étendant sensiblement d'une bordure 6a à une autre bordure 6b opposée dudit corps, ledit profilé étant formé par une bande plane de tôle en acier pliée selon sa longueur selon au moins une ligne de pliage 7a,7b de manière à maximiser son moment d'inertie selon sa longueur, l'acier de ladite tôle présentant une limite d'élasticité supérieure à 400 MPa,
ladite bande étant pliée dans un même sens à angle droit selon deux lignes de pliage 7a,7b, de sorte que ledit profilé présente:
- deux pans parallèles 8a,8b s'étendant en vis-à-vis l'un de l'autre respectivement selon chacune des faces 3,4 du corps 2,
- et un pan de jonction 9 desdits pans parallèles, ledit pan de jonction s'étendant selon l'épaisseur dudit corps.

Le pliage d'une bande de tôle présentant une telle limite d'élasticité requiert notamment un procédé d'estampage, c'est à dire un formage par pressage entre un poinçon et une matrice, pouvant se faire en une ou plusieurs étapes.

Selon une réalisation, la bande de tôle présente une épaisseur comprise entre 0,3 et 2 mm, le choix d'une épaisseur minimale contribuant à l'allègement du panneau 1.

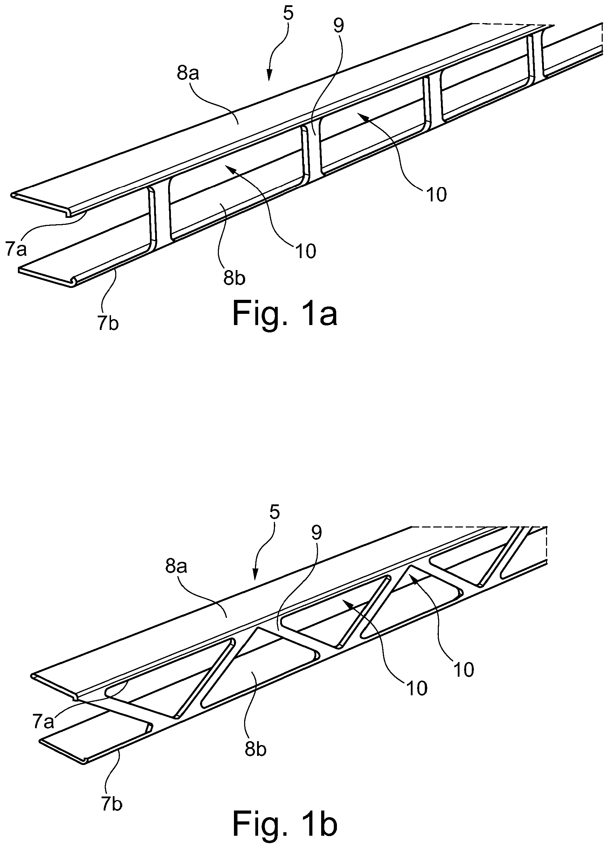

Selon les réalisations représentées en figures 1a et 1b, le pan de jonction 9 - qui est celui contribuant le moins au moment d'inertie du profilé 5 selon sa longueur - est pourvu de perforations 10 d'allègement.

En pratique, il est souhaitable d'ajourer au maximum le pan de jonction 9, ceci moyennant une étape d'estampage avec poinçonnement réalisant les perforations 10.

Selon une réalisation, afin de faciliter la réalisation du profilé 5, le poinçonnement peut être réalisé avant le pliage de la tôle.

Selon une réalisation, la surface occupée par les perforations 10 est supérieure à 85% de la surface totale du pan de jonction 9.

Selon la réalisation de la figure 1a, les perforations 10 définissent des rectangles contigus séparés deux à deux par une bande de pan de jonction 9 définissant une nervure perpendiculaire aux pans parallèles 8a,8b.

Selon la réalisation de la figure 1b, permettant d'optimiser la résistance en flexion du profilé 5, les perforations 10 définissent des triangles contigus séparés deux à deux par une bande de pan de jonction 9 définissant une nervure oblique - inclinée par exemple de l'ordre de 45° - par rapport aux pans parallèles 8a,8b.

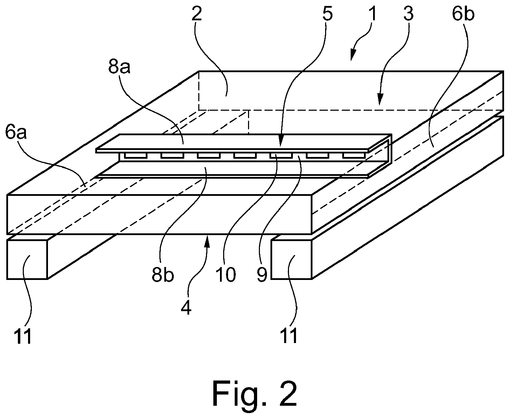

Selon la réalisation représentée en figure 2, le corps 2 est à base de mousse - notamment de polyuréthanne - rigide - c'est à dire non élastiquement compressible-, le profilé 5 étant intégré dans le volume dudit corps qui le surmoule.

On notera que, dans ce cas, les perforations 10 décrites avant permettent de faciliter la répartition de la mousse dans le moule.

Selon une réalisation non représentée, le corps 2 est à base de feutre thermo-comprimé, le profilé 10 étant fixé audit corps.

Selon une autre réalisation non représentée, le corps 2 est à base d'une structure formant un réseau régulier d'alvéoles - par exemple en nid d'abeille -, le profilé 5 étant fixé à ladite structure.

On peut notamment prévoir que les faces d'endroit et d'envers d'une structure en nid d'abeille soient recouvertes de deux couches respectives de fibres de renfort, notamment en verre, chacune desdites couches étant imprégnée de mousse, notamment de polyuréthanne.

Dans ce cas, on peut prévoir que le profilé 5 soit inséré entre la structure et une des couches de fibres.

On décrit enfin, en référence à la figure 2, une architecture de montage dans un véhicule automobile d'un panneau 1 tel que décrit ci-dessus, ladite architecture comprenant :
- deux bases de réception 11 solidaires de la caisse dudit véhicule, de deux bordures opposées 6a,6b du corps 2 dudit panneau,
- ledit panneau dont le profilé 5 de rigidification s'étend sensiblement d'une desdites bordures à l'autre.

## Revendications

1. Panneau (1) de garnissage intérieur de véhicule automobile, ledit panneau comprenant :
• un corps (2) en forme générale de plaque présentant une face d'endroit (3) de réception d'une charge et une face d'envers (4),
• et au moins un profilé (5) métallique allongé de rigidification dudit corps en flexion, ledit profilé s'étendant sensiblement d'une bordure (6a) à une autre bordure opposée (6b) dudit corps, ledit profilé étant formé par une bande plane de tôle en acier pliée selon sa longueur selon au moins une ligne (7a,7b) de pliage de manière à maximiser son moment d'inertie selon sa longueur, l'acier de ladite tôle présentant une limite d'élasticité supérieure à 400 MPa,
ledit panneau étant **caractérisé en ce que** ladite bande est pliée dans un même sens à angle droit selon deux lignes de pliage (7a,7b), de sorte que ledit profilé présente:
• deux pans parallèles (8a,8b) s'étendant en vis-à-vis l'un de l'autre respectivement selon chacune des faces (3,4) du corps (2),
• et un pan de jonction (9) desdits pans parallèles, ledit pan de jonction s'étendant selon l'épaisseur dudit corps.

2. Panneau selon la revendication 1, **caractérisé en ce que** la bande de tôle présente une épaisseur comprise entre 0,3 et 2 mm.

3. Panneau selon l'une quelconque des revendications 1 ou 2, **caractérisé en ce que** le pan de jonction (9) est pourvu de perforations (10) d'allègement.

4. Panneau selon la revendication 3, **caractérisé en ce que** la surface occupée par les perforations (10) est supérieure à 85% de la surface totale du pan de jonction (9).

5. Panneau selon l'une des revendications 3 ou 4, **caractérisé en ce que** les perforations (10) définissent des triangles contigus séparés deux à deux par une bande de pan de jonction (9) définissant une nervure oblique par rapport aux pans parallèles (8a,8b).

6. Panneau selon l'une quelconque des revendications 1 à 5, **caractérisé en ce que** le corps (2) est à base de mousse rigide, le profilé (5) étant intégré dans le volume dudit corps qui le surmoule.

7. Panneau selon l'une quelconque des revendications 1 à 5, **caractérisé en ce que** le corps (2) est à base de feutre thermo-comprimé, le profilé (5) étant fixé audit corps.

8. Panneau selon l'une quelconque des revendications 1 à 5, **caractérisé en ce que** le corps (2) est à base d'une structure formant un réseau régulier d'alvéoles, le profilé (5) étant fixé à ladite structure.

9. Architecture de montage dans un véhicule automobile d'un panneau selon l'une quelconque des revendications précédentes, ladite architecture comprenant :
• deux bases de réception (11), solidaires de la caisse dudit véhicule, de deux bordures opposées (6a,6b) du corps dudit panneau,
• ledit panneau dont le profilé (5) de rigidification s'étend sensiblement d'une desdites bordures à l'autre.

## Patentansprüche

1. Innenverkleidungspaneel (1) eines Kraftfahrzeugs, wobei das Paneel umfasst:
• einen Körper (2) in einer allgemeinen Plattenform, der eine Vorderseite (3) zur Aufnahme einer Last, und eine Rückseite (4) aufweist,
• und mindestens ein längliches metallisches Profil (5) zur Biegeversteifung des Körpers, wobei sich das Profil im Wesentlichen von einer Umrandung (6a) zu einer anderen gegenüberliegenden Umrandung (6b) des Körpers erstreckt, wobei das Profil durch ein in der Länge, entlang mindestens einer Falzlinie (7a, 7b) gefalztes flaches Stahlblechband gebildet wird, um sein Trägheitsmoment in seiner Längsrichtung zu maximieren, wobei der Stahl des Bleches eine Elastizitätsgrenze von mehr als 400 MPa aufweist,
wobei das Paneel **dadurch gekennzeichnet ist, dass** das Band in einer gleichen Richtung im rechten Winkel entlang zweier Falzlinien (7a, 7b) derart gefalzt wird, dass das Profil Folgendes aufweist:
• zwei parallele Flächen (8a, 8b), die sich jeweils einander gegenüber über jede der Seiten (3, 4) des Körpers (2) erstrecken,
• und eine Verbindungsfläche (9) der parallelen Flächen, wobei sich die Verbindungsfläche entlang der Dicke des Körpers erstreckt.

2. Paneel nach Anspruch 1, **dadurch gekennzeichnet, dass** das Blechband eine Dicke aufweist, die zwischen 0,3 und 2 mm liegt.

3. Paneel nach einem der Ansprüche 1 oder 2, **dadurch gekennzeichnet, dass** die Verbindungsfläche (9) mit Erleichterungsperforierungen (10) versehen ist.

4. Paneel nach Anspruch 3, **dadurch gekennzeichnet, dass** die von den Perforierungen (10) belegte Oberfläche größer als 85 % der Gesamtoberfläche der Verbindungsfläche (9) ausmacht.

5. Paneel nach einem der Ansprüche 3 oder 4, **dadurch gekennzeichnet, dass** die Perforierungen (10) anliegende Dreiecke definieren, die paarweise durch ein Band einer Verbindungsfläche (9) getrennt sind, das eine schräge Rippe in Bezug auf die parallelen Flächen (8a, 8b) definiert.

6. Paneel nach einem der Ansprüche 1 bis 5, **dadurch gekennzeichnet, dass** der Körper (2) auf Basis eines Hartschaumstoffes ist, wobei das Profil (5) in das Volumen des Körpers, von dem er umspritzt ist, integriert ist.

7. Paneel nach einem der Ansprüche 1 bis 5, **dadurch gekennzeichnet, dass** der Körper (2) auf Basis eines thermoverdichteten Filzes ist, wobei das Profil (5) am Körper befestigt ist.

8. Paneel nach einem der Ansprüche 1 bis 5, **dadurch gekennzeichnet, dass** der Körper (2) auf Basis einer Struktur ist, die ein regelmäßiges Zellennetzwerk bildet, wobei das Profil (5) an der Struktur befestigt ist.

9. Architektur zum Anbringen in einem Kraftfahrzeug eines Paneels nach einem der vorstehenden Ansprüche, wobei die Architektur Folgendes umfasst:
• zwei Aufnahmebasen (11), die fest mit der Karosserie des Fahrzeugs, den beiden gegenüberliegenden Umrandungen (6a, 6b) des Körpers des Paneels verbunden sind,
• das Paneel, dessen Versteifungsprofil (5) sich im Wesentlichen von einer der Umrandungen zur anderen erstreckt.

## Claims

1. Vehicle interior trim panel (1), said panel comprising:
• a body (2) in the general form of a plate having a front face (3) for receiving a load and a back face (4),
• and at least one elongate metal profile (5) for flexurally stiffening said body, said profile extending substantially from one edge (6a) to another opposing edge (6b) of said body, said profile being formed by a flat steel sheet strip bent along its length along at least one bend line (7a,7b) so as to maximise its moment of inertia along its length, the steel of said sheet having a yield strength higher than 400 MPa,
said panel being **characterised in that** said strip is bent in the same direction at a right angle along two bend lines (7a,7b), such that said profile has:
• two parallel sections (8a,8b) extending opposite one another respectively according to each of the faces (3,4) of the body (2),
• and a junction section (9) of said parallel sections, said junction section extending according to the thickness of said body.

2. Panel according to claim 1, **characterised in that** the sheet strip has a thickness between 0.3 and 2 mm.

3. Panel according to any one of claims 1 or 2, **characterised in that** the junction section (9) is provided with weight-reducing perforations (10).

4. Panel according to claim 3, **characterised in that** the surface occupied by the perforations (10) is greater than 85% of the total surface of the junction section (9).

5. Panel according to one of claims 3 or 4, **characterised in that** the perforations (10) define adjacent triangles separated two by two by a junction section strip (9) defining an oblique rib relative to the parallel sections (8a,8b).

6. Panel according to any one of claims 1 to 5, **characterised in that** the body (2) is made from a rigid foam, the profile (5) being integrated into the volume of said body that overmoulds it.

7. Panel according to any one of claims 1 to 5, **characterised in that** the body (2) is made fromthermocompressed felt, the profile (5) being attached to said body.

8. Panel according to any one of claims 1 to 5, **characterised in that** the body (2) is made from a structure forming a regular network of cells, the profile (5) being attached to said structure.

9. Architecture for mounting in a motor vehicle a panel according to any one of the preceding claims, said architecture comprising:
• two receiving bases (11), integral with the shell body of said vehicle, of two opposing edges (6a,6b) of the body of said panel,
• said panel wherein the stiffening profile (5) extends substantially from one of said edges to the other.
